Europäisches Patentamt

European Patent Office

Office européen des brevets

(19)

(11) **EP 0 716 287 B1**

(12) **EUROPÄISCHE PATENTSCHRIFT**

(45) Veröffentlichungstag und Bekanntmachung des Hinweises auf die Patenterteilung:
**25.04.2001 Patentblatt 2001/17**

(51) Int Cl.⁷: **G01B 11/02**, G01D 5/34

(21) Anmeldenummer: **95119022.2**

(22) Anmeldetag: **02.12.1995**

(54) **Vorrichtungen zum Messen einer Lage von Bahnen oder Bogen**

Device for measuring a position of webs or sheets

Dispositif pour la mesure d'une position de bandes ou de feuilles

(84) Benannte Vertragsstaaten:
**CH DE FR GB IT LI SE**

(30) Priorität: **10.12.1994 DE 4444080**
**31.08.1995 DE 19532009**

(43) Veröffentlichungstag der Anmeldung:
**12.06.1996 Patentblatt 1996/24**

(73) Patentinhaber: **Koenig & Bauer Aktiengesellschaft**
**97080 Würzburg (DE)**

(72) Erfinder:
• **Schaede, Johannes G.**
**D-97074 Würzburg (DE)**
• **Schwitzky, Volkmar R.**
**D-97076 Würzburg (DE)**

(56) Entgegenhaltungen:
EP-A- 0 314 521      DE-A- 2 231 776
DE-A- 2 448 611      US-A- 3 495 089

• **PATENT ABSTRACTS OF JAPAN vol. 7, no. 150 (P-207), 30.Juni 1983 & JP-A-58 062504 (OPUTO KIGIYOU K.K.)**

## Beschreibung

Die Erfindung betrifft Vorrichtungen zum Messen einer Lage einer Kante von Bahnen oder Bogen gemäß den Merkmalen der Ansprüche 1 oder 2.

Aus der DE-OS 22 02 087 ist eine Meßeinrichtung zur lichtelektrischen Messung einer Lage von Bogenkanten bezüglich einer Bezugslinie bekannt. Von einer Beleuchtungseinrichtung ausgehendes Licht wird von einem lichtelektrischen Empfänger aufgefangen. Entsprechend der Lage der zwischen Beleuchtungseinrichtung und Empfänger eingebrachten Bogenkante wird ein Videosignal erzeugt.
Das lichtelektrische Empfangsteil besteht aus einer Vielzahl von in geringem Abstand hintereinander angeordneten einzelnen Photoelementen.

Nachteilig ist hierbei, daß schon kleinste Beschädigungen oder Fasern an der zu messenden Bogenkante zu Fehlmessungen führen, da sich diese Fehler unmittelbar auf das Meßergebnis auswirken.

Die JP 58-062504 A beschreibt eine Vorrichtung zur Messung einer Lage eines Objektes. Um die Meßgenauigkeit zu erhöhen, wird das Bild des Objektes mittels einer Zylinderlinse vergrößert.

Der Erfindung liegt die Aufgabe zugrunde, Vorrichtungen zum Messen einer Lage einer Kante von Bahnen oder Bogen mittels eines mit einer Vielzahl von Photoelementen versehenen photoelektrischen Empfängers zu schaffen, bei dem bzw. bei der trotz kleiner Beschädigungen oder über eine senkrechte Projektion der Kante herausragender Fasern, sogenannter Anomalien, im Meßbereich der zu messenden Kante von Bahn oder Bogen der photoelektrische Empfänger die Lage der Kante bezüglich dieses Empfängers exakt erkennt.

Diese Aufgabe wird erfindungsgemäß durch Vorrichtungen zum Messen der Lage einer Kante von Bahnen oder Bogen mit den Merkmalen der Ansprüche 1 oder 2 gelöst.

In vorteilhafter Weise werden durch die erfindungsgemäßen Vorrichtungen Anomalien einer Kante von Bahnen oder Bogen so dargestellt, daß ein photoelektrischer Empfänger diese nicht als Kante erkennt und somit Fehlmessungen vermieden werden. Anomalien der Kante können insbesondere bei Papierbögen oder Papierbahnen in Form von beispielsweise Papierfasern, unsauberen Schnittkanten oder Rissen auftreten.
Auch wenn die Breite der Anomalien größer ist als die Breite des photoelektrischen Empfängers, werden diese Anomalien so auf dem photoelektrischen Empfänger dargestellt, daß ein Intensitätsunterschied zur zu messenden Kante vorhanden ist. Trotz dieses Intensitätsunterschiedes kann eine Auswerteelektronik die exakte Lage der zu messenden Kante von Bahnen oder Bogen bestimmen.
Außerdem ist besonders vorteilhaft, daß aufgrund der erfindungsgemäßen Vorrichtungen nicht nur ein Bereich der Kante, der der Breite des photoelektrischen Empfängers entspricht, ausgewertet werden kann, sondern ein wesentlich größerer Bereich der Kante (Faktor 50 - 1000). Hiermit wird die Meßsicherheit wesentlich erhöht. Die verwendeten Hilfsmittel sind preiswerte Standardteile.

Die erfindungsgemäßen Vorrichtungen sind in der Zeichnung dargestellt und werden im folgenden näher beschrieben.

Es zeigen

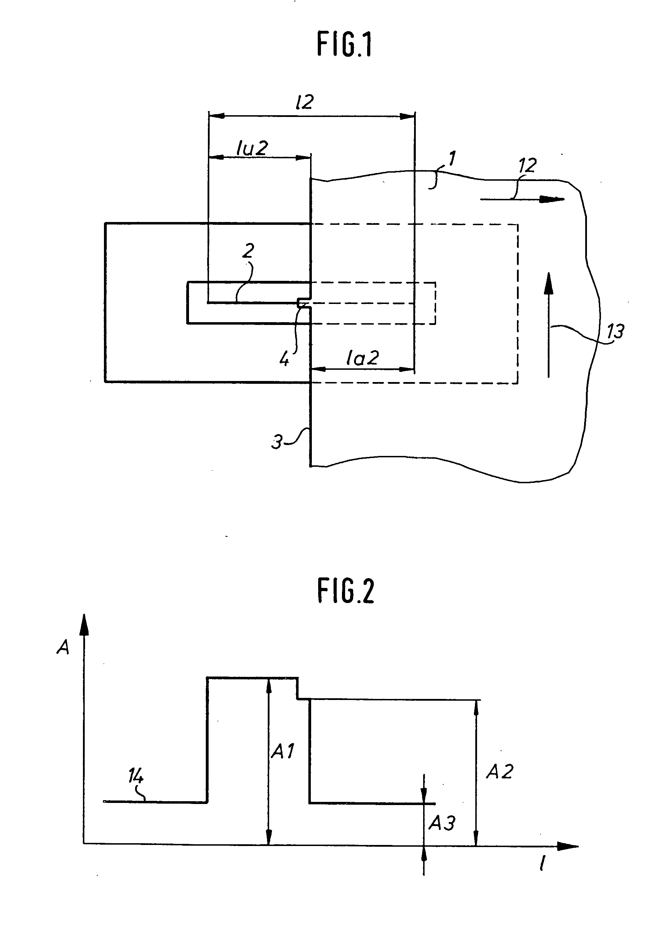

Fig. 1    eine schematische Draufsicht einer erfindungsgemäßen Vorrichtung mit Bahn und photoelektrischem Empfänger;

Fig. 2    einen schematischen Verlauf eines der Lage der Bahn entsprechenden Videosignals;

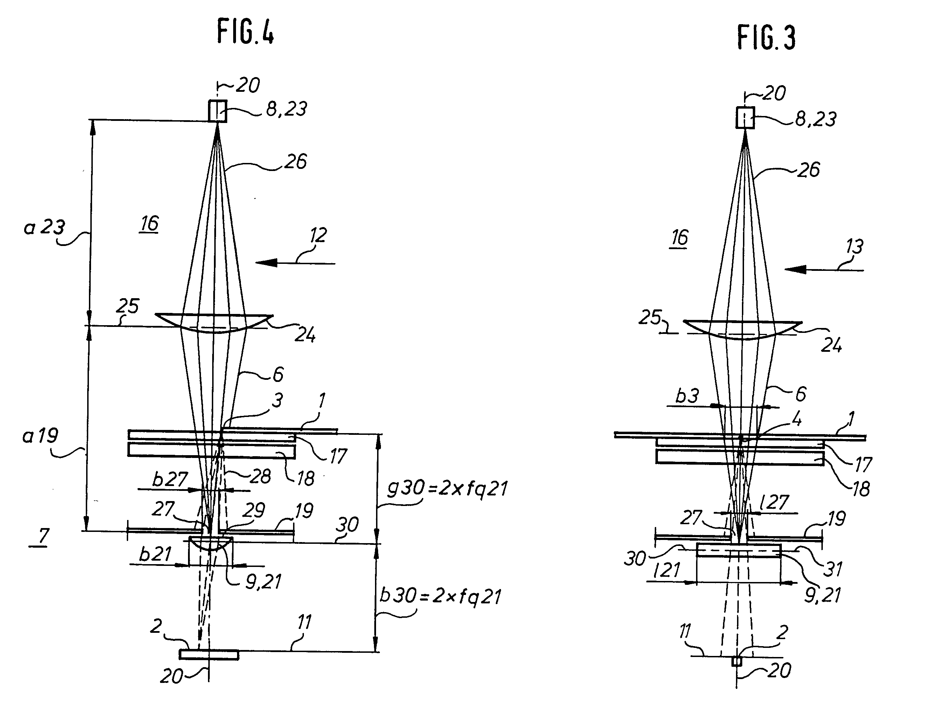

Fig. 3    eine schematische Seitenansicht parallel zu einer zu messenden Kante der Bahn einer ersten erfindungsgemäßen Vorrichtung;

Fig. 4    eine schematische Seitenansicht senkrecht zu der zu messenden Kante der Bahn einer ersten erfindungsgemäßen Vorrichtung;

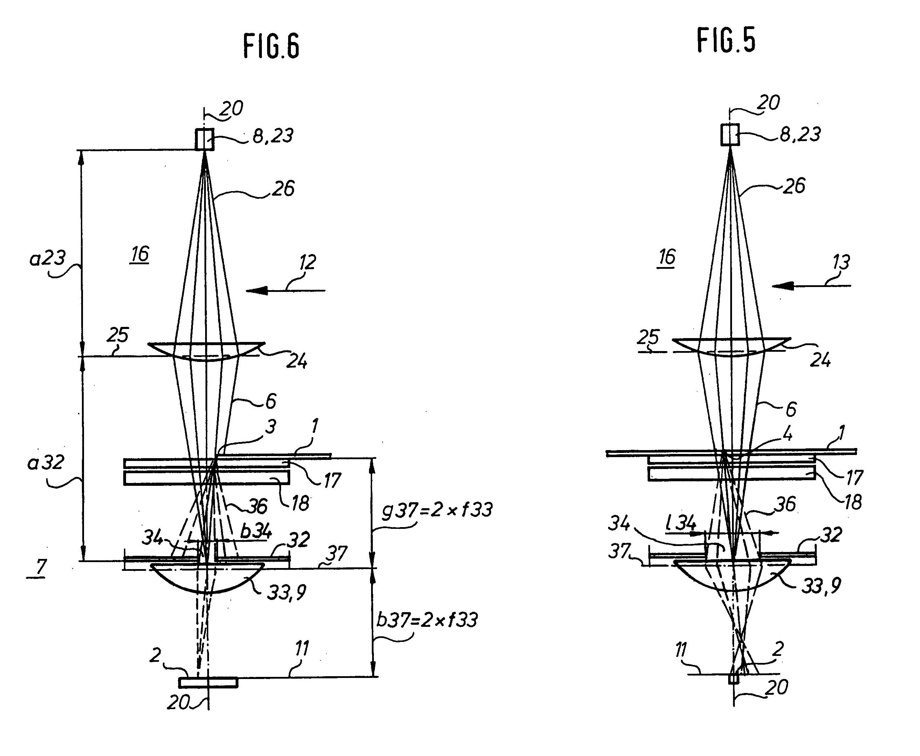

Fig. 5    eine schematische Seitenansicht parallel zu der zu messenden Kante der Bahn einer zweiten erfindungsgemäßen Vorrichtung;

Fig. 6    eine schematische Seitenansicht senkrecht zu der zu messenden Kante der Bahn einer zweiten erfindungsgemäßen Vorrichtung.

Eine zu messende Bahn 1 oder ein Bogen wird zumindest im Meßbereich zur Bestimmung seiner Lage bezüglich eines photoelektrischen Empfängers 2 von einer in Form einer Geraden verlaufenden Kante 3 begrenzt. Diese Bahn 1 oder dieser Bogen ist im wesentlichen lichtabsorbierend. Bei dieser Bahn 1 oder diesem Bogen handelt es sich vorzugsweise um Papierbahnen bzw. Papierbogen, insbesondere in Rotationsdruckmaschinen, aber auch um anderes bahn- oder tafelförmiges Gut, wie Blech oder Folien. Im folgenden wird diese beschriebene Bahn 1 oder dieser Bogen vereinfachend Bahn 1 genannt.
Die zu messende Kante 3 der Bahn 1 kann Anomalien 4 im Meßbereich in Form von z. B. kleinen Beschädigungen, über eine senkrechte Projektion der Kante 3 hervorstehende Fasern oder Einrisse aufweisen.

Die Bahn 1, die von der Anomalien 4 aufweisenden Kante 3 begrenzt wird, wird in ein Lichtstrahlenbündel 6 eines optischen Systemes 7 eingebracht. Dieses Lichtstrahlenbündel 6 geht von einer Lichtquelle 8 aus und trifft auf den photoelektrischen Empfänger 2. Mittels eines optischen Bauelementes 9 oder eines Systemes von optischen Bauelementen wird die Kante 3 der Bahn 1 in einer Abbildungsebene 11 auf dem photoelektrischen Empfänger 2 derart abgebildet, daß die Abbildung in einer senkrecht zur Kante 3 der Bahn 1 verlaufenden Querachse 12 in einem Querabbildungsmaßstab scharf und in einer parallel zur Kante 3 der Bahn 1 verlaufenden Längsachse 13 unscharf erfolgt. In besonders vorteilhafter Weise kann der Querabbildungsmaßstab eins zu eins betragen, weil dadurch eine Umrechnung von Meßwerten entsprechend dem Querabbildungsmaßstab entfällt. Die Lage der Kante 3 der Bahn 1 wird über eine wählbare Meßbreite b3, z. B. b3 = 0,5 mm bis 10 mm, die mittels einer Blende begrenzt werden kann, ausgewertet. Mittels der Optik wird die Kante 3 der Bahn 1 im Bereich dieser Meßbreite b3 unscharf, d. h. verzerrt in der Abbildungsebene 11 in Richtung Längsachse 13 abgebildet.

Als mit einer Vielzahl von Photoelementen versehener photoelektrischer Empfänger 2 kann beispielsweise ein an sich bekannter CCD-Zeilensensor 2 (charged coupled device) eingesetzt werden. Dieser CCD-Zeilensensor 2 kann aus z. B. 1728 in einer Zeile angeordneten Meßelementen bestehen. Diese Meßelemente sind z. B. 10 µm x 13µm groß und ein Mittenabstand zwischen zwei Meßelementen beträgt 10 µm, d. h. auf einen Millimeter kommen 100 Meßelemente. Hiermit ergibt sich eine Meßlänge 12 von 17,28 mm des beschriebenen CCD-Zeilensensors 2.

Der CCD-Zeilensensor 2 liefert mittels einer Auswerteelektronik ein analoges Videosignal 14, welches einen Amplitudenverlauf entsprechend der Lage der Kante 3 der Bahn 1 aufweist. So kann z. B. eine Amplitude A3 des durch die Bahn 1 abgedeckten Bereiches mit einer Länge la2 des CCD-Zeilensensors 2 minimal sein, während der unbedeckte Bereich mit einer Länge lu2 des CCD-Zeilensensors 2 eine der Intensität einer Beleuchtungseinrichtung 16 entsprechende Amplitude A1 liefern kann.

Der nutzbare Arbeitsbereich kann natürlich auch kleiner als die Meßlänge 12 sein, im vorliegenden Beispiel entspricht der Arbeitsbereich der Meßlänge 12.

Weist nun die Kante 3 der Bahn 1 im Bereich der Meßbreite b3 eine oder mehrere Anomalien 4 auf, werden auch diese Anomalien 4 entsprechend unscharf in der Abbildungsebene 11 in Richtung der Längsachse 13, d. h. auf dem CCD-Zeilensensor 2 abgebildet. Dies hat zur Folge, daß je nach Breite der Anomalie 4 in Längsrichtung sich eine entsprechende, auf dem CCD-Zeilensensor 2 wirkende Intensität der Beleuchtungseinrichtung 16 einstellt. Somit ergibt sich eine der Größe der Anomalie 4 bzw. der Anzahl der Anomalien 4 entsprechende Amplitude A2 des Videosignals 14. Die Größe dieser Amplitude A2 liegt zwischen der Amplitude A3 im abgedeckten Zustand des CCD-Zeilensensors 2 und der Amplitude A1 im völlig unbedeckten Zustand des CCD-Zeilensensors 2, solange die Anomalie 4 oder mehrere Anomalien 4 nicht die gesamte Meßbreite b3 einnimmt bzw. einnehmen. Aus diesem abgestuften Videosignal 14 kann nun mittels geeigneter, bekannter Elektronik die Lage der Kante 3 der Bahn 1 bestimmt werden.

Eine erste Vorrichtung zur Durchführung des erfindungsgemäßen Verfahrens besteht im wesentlichen aus einer Beleuchtungseinrichtung 16, einem Objektträger 17, einem Filter 18, einer Blende 19, einer abbildenden Linse 21 und dem photoelektrischem Empfänger, z. B. einem CCD-Zeilensensor 2. Diese Elemente 16, 17, 18, 19, 21, 2 sind entlang einer optischen Achse 20 angeordnet.

Die Beleuchtungseinrichtung 16 besteht im wesentlichen aus einer Infrarot (IR) - Lichtquelle 23 und einem Kondensor 24. Die IR - Lichtquelle 23 strahlt diffuse Lichtstrahlen 26 aus. In einem Abstand a23 2 x f24, zur IR - Lichtquelle 23, der einer doppelten Brennweite f24, z. B. f24 = 20 mm, des Kondensors 24 entspricht, befindet sich eine Hauptebene 25 des Kondensors 24. Als Kondensor 24 dient im dargestellten Beispiel eine asphärische Linse, wobei der Kondensor 24 aber auch aus mehreren Linsen, z. B. einer Kombination aus einer Konkavkonvexlinse und einer oder mehreren asphärischen Linsen bestehen kann.

Der Kondensor 24 fokussiert die Lichtstrahlen 26 in einem Abstand a19 = 2 x f24, in dem die Blende 19 angeordnet ist. Die abbildende Linse 21 weist in einer senkrecht zur Kante 3 der Bahn 1 verlaufenden Querachse 12 eine erste Brennweite fq21, z. B. fq21 = 10 mm, und in einer parallel zur Kante 3 der Bahn 1 verlaufenden Längsachse 13 eine zweite Brennweite f121 auf. Zwischen dem Kondensor 24 und der abbildenden Linse 21 ist der Objektträger 17 derart angeordnet, daß sich die zu messende Kante 3 der Bahn 1 in einer Gegenstandsweite g30 zur Hauptebene 30 der abbildenden Linse 21 befindet. In einer Bildweite b30 zu der Hauptebene 30 der abbildenden Linse 21 ist die Abbildungsebene 11 des CCD-Zeilensensors 2 angeordnet. Um eine scharfe Abbildung zu erhalten muß der Kehrwert der Brennweite fq21 die Summe aus den Kehrwerten von Gegenstandsweite g30 und Bildweite b30 ergeben, d. h.

$$1/fq21 = 1/g30 + 1/b30.$$

Als Objektträger 17 ist eine planparallele Glasplatte 17 vorgesehen. Vor der abbildenden Linse 21 ist die Blende 19 mit einer Blendenöffnung 27 einer Breite b27 und Länge 127 und der Filter 18, z. B. ein IR - Filter, angeordnet. Die Meßbreite b3 an der Kante 3 wird durch die projizierte Länge 127 der Blendenöffnung 27 der Blende 19 bezüglich des CCD-Zeilensensors 2 bestimmt.

Im vorliegenden Beispiel ist die abbildende Linse 21 als Zylinderlinse 21 ausgeführt, die derart in der Gegenstandsweite g30 = 2 x fq21 zur Glasplatte 17 in Lichtstrahlen 28 angeordnet ist, daß deren Planseite 29 parallel zur Glasplatte 17 und deren Längsachse 31 parallel zur zu messenden Kante 3 der Bahn 1 liegt. Anstelle einer abbildenden Linse 21 kann noch ein aus mehreren Linsen bestehendes Linsensystem verwendet werden. Nach der Zylinderlinse 21 befindet sich in der Bildweite b30 = 2 x fq21, d. h. wiederum in der doppelten Brennweite fq21 der Zylinderlinse 21, in der Abbildungsebene 11 der CCD-Zeilensensor 2 senkrecht zur zu messenden Kante 3 der Bahn 1. Somit ergibt sich in diesem Beispiel ein Querabbildungsmaßstab von eins zu eins.

Auf die planparallele Glasplatte 17, d. h. in der Gegenstandsweite g30 wird die zu messende Kante 3 der Bahn 1 parallel zur Längsachse 31 der Zylinderlinse 21 in die Lichtstrahlen 6 gebracht. Ein auf die Kante 3 auftreffender Teil der Lichtstrahlen 6 wird von dieser zu Lichtstrahlen 28 abgelenkt und diffus weitergeleitet. Die von der zu messenden Kante 3 ausgehenden Lichtstrahlen 28 treffen auf die Blendenöffnung 27. Nur der Teil der Lichtstrahlen 28, der auf die Blendenöffnung 27 trifft, durchdringt die Blende 19 und trifft auf die Zylinderlinse 21. Die Breite b27, z. B. b27 = 0,1 mm bis 2 mm, und Länge 127, z. B. 127 = 0,1 mm bis 2 mm, der Blendenöffnung 27 ist kleiner als eine Breite b21, z. B. b21 = 9 mm, und Länge 121, z. B. 121 = 18 mm, der Zylinderlinse 21. Durch die Zylinderlinse 21 werden die Lichtstrahlen 28 und damit die zu messende Kante 3 der Bahn 1 in Richtung der Querachse 12 scharf, aber spiegelbildlich auf dem CCD-Zeilensensor 2 abgebildet. In Richtung der Längsachse 13 bzw. 31 werden die auf die Zylinderlinse 21 einfallenden, diffusen Lichtstrahlen 28 so gebrochen, daß eine zerstreute, unscharfe Abbildung der Kante 3 auf dem CCD-Zeilensensor 2 entsteht.

Weist die zu messende Kante 3 der Bahn 1 im Bereich des CCD-Zeilensensors 2 liegende Anomalien 4 auf, werden diese Anomalien 4 in Richtung der Querachse 12 der Zylinderlinse 21 exakt, spiegelbildlich, aber entlang der Längsachse 13 bzw. 31 der Zylinderlinse 21 zerstreut dargestellt. Somit trifft entlang der Längsachse 13 nur ein Teil der die Anomalien 4 abbildenden Lichtstrahlen auf den CCD-Zeilensensor 2, aber gleichzeitig trifft auch ein Teil der von den Anomalien 4 nicht beeinflußten, "freien" Lichtstrahlen auf den CCD-Zeilensensor 2. Damit entsteht auf dem CCD-Zeilensensor 2 durch die Anomalien 4 ein Bereich verminderter Intensität, welcher ein beschriebenes, abgestuftes Videosignal hervorruft und das durch eine Elektronik ausgewertet wird.

Eine zweite Vorrichtung zur Durchführung des erfindungsgemäßen Verfahrens besteht im wesentlichen wieder aus der Beleuchtungseinrichtung 16, dem Objektträger 17, dem Filter 18, einer Blende 32, einer abbildenden Linse 33 und dem photoelektrischen Empfänger, z. B. einem CCD-Zeilensensor 2. Diese Elemente 16, 17, 18, 32, 33, 2 sind entsprechendem ersten Vorrichtung entlang einer optischen Achse 20 angeordnet.

In einem Abstand a32 = 2 x f24 zu der Hauptebene 25 des Kondensors 24 ist die Blende 32 angeordnet. Die Blende 32 weist eine schlitzförmige Blendenöffnung 34 mit einer Länge 134, z. B. 134 = 0,2 mm bis 10 mm, und einer Breite b34, z. B. b34 =0,1 mm bis 2 mm, auf. Die Länge 134 erstreckt sich parallel zur zu messenden Kante 3 der Bahn 1.

Die abbildende Linse 33 ist als sphärische Linse 33 ausgeführt. Sphärische Linsen 33 weisen sogenannte Aberrationen auf, was zur Folge hat, daß eine Brennweite f33, z. B. f33 = 10 mm, nur entlang der optischen Achse 20 exakt ist. Außerhalb dieses Bereiches weicht eine Brennweite f33' von diesem exakten Wert ab und die Brennweite f33' verringert sich von der optischen Achse 20 ausgehend konzentrisch nach außen hin. Anstelle einer abbildenden Linse 33 kann auch ein aus mehreren Linsen bestehendes Linsensystem verwendet werden. Zwischen dem Kondensor 24 und der sphärischen Linse 33 ist der Objektträger 17 derart angeordnet, daß sich die zu messende Kante 3 der Bahn 1 in einer Gegenstandsweite g37 zu einer Hauptebene 37 der sphärischen Linse 33 befindet. In einem Abstand, der einer Bildweite b37 entspricht, zu der Hauptebene 37 der sphärischen Linse 33 ist die Abbildungsebene 11 des CCD-Zeilensensors 2 angeordnet. Um eine scharfe Abbildung zu erhalten, muß der Kehrwert der Brennweite f33 die Summe aus den Kehrwerten von Gegenstandsweite g37 und Bildweite b37 ergeben, d. h. $1/f33 = 1/g37 + 1/b37$. Die sphärische Linse 33 ist in der Gegenstandsweite g37, die beispielsweise der doppelten Brennweite f33 entspricht, zum Objektträger 17 angeordnet. Nach der sphärischen Linse 33 befindet sich in der Bildweite b37, z. B. b37 = 2 x f33, in der Abbildungsebene 11 der CCD-Zeilensensor, womit sich in diesem Beispiel wiederum ein Querabbildungsmaßstab von eins zu eins ergibt.

Die zu messende Kante 3 der Bahn 1 wird in die Lichtstrahlen 6 der Beleuchtungseinrichtung 16 gebracht. Ein auf die Kante 3 auftreffender Teil der Lichtstrahlen 6 wird zu Lichtstrahlen 36 abgelenkt und diffus weitergeleitet. Die von der zu messenden Kante 3 ausgehenden Lichtstrahlen 36 treffen auf die Blendenöffnung 34. Der Teil der Lichtstrahlen 36 der durch die Blendenöffnung 34 dringt, trifft auf die sphärische Linse 33. Durch die sphärische Linse 33 werden die Lichtstrahlen 36 im unmittelbaren Bereich der optischen Achse 20 scharf, aber spiegelbildlich auf dem CCD-Zeilensensor 2 abgebildet. Durch die schlitzförmige Blende 32 werden die Lichtstrahlen 36 in Richtung der Querachse 12 auf einen engen Bereich um die optische Achse 20 beschränkt, während parallel zur Kante 3, d.h. in Richtung der Längsachse 13, die Lichtstrahlen die sphärische Linse 33 auch in von der optischen Achse 20 entfernten Bereichen durchdringen. In diesen Bereichen ist die Brennweite f33' verkürzt, so daß in Richtung der Längsachse 13 auf dem CCD-Zeilensensor 2 eine zerstreute, unscharfe Abbildung der Kante 3 entsteht.

Weist die zu messende Kante 3 der Bahn 1 im Bereich des CCD-Zeilensensors 2 liegende Anomalien 4 auf, werden diese Anomalien 4 senkrecht zur Kante 3 exakt und spiegelbildlich, aber parallel zur Kante 3 zerstreut dargestellt. Somit treffen parallel zur Kante 3 ein Teil der die Anomalien 4 abbildenden Lichtstrahlen auf den CCD-Zeilensensor 2, aber gleichzeitig trifft auch ein Teil der von den Anomalien nicht beeinflußten, "freien" Lichtstrahlen auf den CCD-Zeilensensor 2. Damit entsteht auf dem CCD-Zeilensensor 2 durch die Anomalien 4 ein Bereich verminderter Intensität, welcher ein beschriebenes, abgestuftes Videosignal hervorruft und das durch eine Elektronik ausgewertet wird.

Teileliste

| 1 | Bahn |
| 2 | CCD-Zeilensensor (photoelektrischer Empfänger) |
| 3 | Kante (1) |
| 4 | Anomalie (3) |
| 5 | - |
| 6 | Lichtstrahlenbündel |
| 7 | optisches System |
| 8 | Lichtquelle (IR - Lichtquelle) |
| 9 | optisches Bauelement |
| 10 | - |
| 11 | Abbildungsebene |
| 12 | Querachse |
| 13 | Längsachse |
| 14 | Videosignal |
| 15 | - |
| 16 | Beleuchtungseinrichtung |
| 17 | Glasplatte (Objektträger) |
| 18 | Filter (IR - Filter) |
| 19 | Blende |
| 20 | Achse, optische |
| 21 | Zylinderlinse (abbildende Linse) |
| 22 | - |
| 23 | Infrarot-Lichtquelle |
| 24 | Kondensor |
| 25 | Hauptebene (24) |
| 26 | Lichtstrahlen, diffus |
| 27 | Blendenöffnung (19) |
| 28 | Lichtstrahlen |
| 29 | Planseite (21) |
| 30 | Hauptebene (21) |
| 31 | Längsachse (21) |
| 32 | Blende |
| 33 | Linse, sphärische (abbildende Linse) |
| 34 | Blendenöffnung |
| 35 | - |
| 36 | Lichtstrahlen |
| 37 | Hauptebene (33) |

| A1 | Amplitude, unbedeckt |
| A2 | Amplitude, mit Anomalie |
| A3 | Amplitude, bedeckt |

| a19 | Abstand |
| a23 | Abstand |
| a32 | Abstand |

| b3 | Meßbreite der Kante |
| b30 | Bildweite |
| b21 | Breite der Zylinderlinse (21) |
| b27 | Breite der Blendenöffnung (27) |
| b34 | Breite der Blendenöffnung (34) |
| b37 | Bildweite |

| fq21 | Brennweite der abbildenden Linse (21) in Richtung der Querachse (12) |
| f24 | Brennweite des Kondensors (24) |
| f33 | Brennweite der abbildenden Linse (33) |
| f33' | Brennweite der abbildenden Linse (33), verringerte |

| g30 | Gegenstandsweite |
| g37 | Bildweite |

| 12 | Meßlänge (2) |
| 121 | Länge der Zylinderlinse (21) |
| 127 | Länge der Blendenöffnung (27) |
| 134 | Länge der Blendenöffnung (34) |

| la2 | Länge des abgedeckten Bereiches |
| lu2 | Länge des unbedeckten Bereiches |

**Patentansprüche**

1. Vorrichtung zum Messen einer Lage einer Kante (3) von einer Bahn (1) oder einem Bogen mit einer lichtelektrischen Meßeinrichtung, bestehend aus einer Beleuchtungseinrichtung (16), einem photoelektrischen Empfänger (2) mit einer Vielzahl von in geringem Abstand hintereinander angeordneten Photoelementen und einem optischen, die Kante (3) der Bahn (1) in einer Abbildungsebene (11) auf dem photoelektrischen Empfänger (2) in Richtung einer senkrecht zur Kante (3) der Bahn (1) verlaufenden Querachse (12) scharf abbildendes und in Richtung einer parallel zur Kante (3) der Bahn (1) verlaufenden Längsachse (13) zerstreut und unscharf darstellendes System (7), wobei das optische System (7) mindestens eine abbildende Linse (21) aufweist, die bezüglich der Querachse (12) eine erste Brennweite fq21 und bezüglich der Längsachse (13) eine zweite, davon verschiedene Brennweite fl21 besitzt, und wobei für die Gegenstandsweite g30 zwischen der Linsenhauptebene (30) und der Kante (3) der Bahn (1), die Bildweite b30 zwischen der Linsenhauptebene (30) und der Abbildungsebene (11) und die erste Brennweite fq21 gilt: $1/fq21 = 1/g30 + 1/b30$, wobei die Hauptebene (30; 38) der abbildenden Linse (21; 33) in einer Bildweite (b30; b37), die der doppelten Brennweite (fq21; f33) der abbildenden Linse (21; 33) entspricht, zum photoelektrischen Empfänger (2) angeordnet ist, wobei als abbildende Linse (21) eine Zylinderlinse (21), deren Längsachse (31) parallel zur messenden Kante (3) der Bahn (1) verläuft, vorgesehen ist, wobei zwischen der Bahn (1) und der abbildenden Linse (21) eine Blende (19) mit einer Blendenöffnung (27), einer Breite b27 und einer Länge 127 angeordnet ist, wobei sowohl die Breite b27 als auch die Länge 127 der Blendenöffnung (27) der Blende (19) kleiner ist als die entsprechende Breite b21 und Länge 121 der Zylinderlinse (21).

2.   Vorrichtung zum Messen einer Lage einer Kante (3) von einer Bahn (1) oder einem Bogen mit einer lichtelektrischen Meßeinrichtung bestehend aus einer Beleuchtungseinrichtung (16), einem photoelektrischen Empfänger (2) mit einer Vielzahl von in geringem Abstand hintereinander angeordneten Photoelementen und einem optischen, die Kante (3) der Bahn (1) in einer Abbildungsebene (11) auf dem photoelektrischen Empfänger (2) in Richtung einer senkrecht zur Kante (3) der Bahn (1) verlaufenden Querachse (12) scharf abbildendes und in Richtung einer parallel zur Kante (3) der Bahn (1) verlaufenden Längsachse (13) zerstreut und unscharf darstellendes System (7), wobei das optische System (7) eine abbildende Linse (33) aufweist, die im unmitelbaren Bereich um ihre optische Achse (20) einen einheitlichen Wert f33 ihrer Brennweite und außerhalb dieses Bereiches davon abweichende Brennweitenwerte besitzt, wobei unmittelbar vor der Linse (33) eine Blende (32) mit einer schlitzförmigen Blendenöffnung (34) einer Länge 134 und einer Breite b34 angeordnet ist, die sich parallel zur messenden Kante (3) der Bahn (1) erstreckt und wobei für die Gegenstandsweite g37 zwischen der Linsenhauptebene (37) und der Kante (3) der Bahn (1), die Bildweite b37 zwischen der Linsenhauptebene (37) und der Abbildungsebene (11) und die Brennweite f33 gilt:

$$1/f33 = 1/g37 + 1/b37.$$

3.   Vorrichtung nach Anspruch 2, dadurch gekennzeichnet, daß als abbildende Linse (33) eine sphärische Linse (33) vorgesehen ist.

4.   Vorrichtung nach Anspruch 2 oder 3, dadurch gekennzeichnet, daß die Breite b34 der Blendenöffnung (34) 0,2 mm bis 2 mm beträgt und die Länge 134 der Blendenöffnung größer als 2 mm ist.

5.   Vorrichtung nach Anspruch 2, dadurch gekennzeichnet, daß die Hauptebene (30; 38) der abbildenden Linse (21; 33) in einer Bildweite (b30; b37), die der doppelten Brennweite (fq21; f33) der abbildenden Linse (21; 33) entspricht, zum photoelektrischen Empfänger (2) angeordnet ist.

6.   Vorrichtung nach Anspruch 1 oder 2, dadurch gekennzeichnet, daß eine planparallele Glasplatte (17) als Objektträger in einer Gegenstandsweite (g30; g37), die der doppelten Brennweite (fq21; f33) der abbildenden Linse (21; 33) entspricht, zur abbildenden Linse (21; 33) angeordnet ist.

7.   Vorrichtung nach Anspruch 6, dadurch gekennzeichnet, daß zwischen der Glasplatte (17) und der abbildenden Linse (21; 33) ein IR - Filter (18) angeordnet ist.

8.   Vorrichtung nach einem der Ansprüche 1 oder 2, dadurch gekennzeichnet, daß die vor der abbildenden Linse (21; 33) angeordnete Beleuchtungseinrichtung (16) aus einer Lichtquelle (8) und einem Kondensor (24) besteht, wobei die Lichtquelle (8) in einem Abstand a23, der der doppelten Brennweite f24 des Kondensors (24) entspricht zu einer Hauptebene (25) des Kondensors (24), angeordnet ist.

9.   Vorrichtung nach einem der Ansprüche 1 oder 2, dadurch gekennzeichnet, daß als photoelektrischer Empfänger (2) ein CCD-Zeilensensor vorgesehen ist.

## Claims

1.   Device for measuring a position of an edge (3) of a web (1) or a sheet, having an optoelectrical measuring apparatus comprising an illuminating apparatus (16), a photoelectric receiver (2) with a large number of photoelements arranged at a short distance one behind another, and an optical system (7) which images the edge (3) of the web (1) sharply in an image plane (11) on the photoelectric receiver (2), in the direction of a transverse axis (12) running at right angles to the edge (3) of the web (1), and scatters the said edge (3) and represents it unsharply in the direction of a longitudinal axis (13) running parallel to the edge (3) of the web (1), the optical system (7) having at least one imaging lens (21) which has a focal length fq21 with respect to the transverse axis (12) and a second focal length fl21, different from the first, with respect to the longitudinal axis (13), and the following being true of the object distance g30 between the principal plane (30) of the lens and the edge (3) of the web (1), the image distance b30 between the principal plane (30) of the lens and the image plane (11) and the first focal length fq21: 1/fq21 = 1/g30 + 1/b30, the principal plane (30; 38) of the imaging lens (21; 33) being arranged at an image distance (b30; b37), which corresponds to twice the focal length (fq21; f33) of the imaging lens (21; 33), in relation to the photoelectric receiver (2), the imaging lens (21) provided being a cylindrical lens (21) whose longitudinal axis (31) runs parallel to the edge (3) of the web (1) to be measured, an aperture stop (19) with a width b27 and a length 127 being arranged between the web (1) and imaging lens (21), both the width b27 and the length 127 of the aperture (27) of the aperture stop (19) being smaller than the corresponding width b21 and length 121 of the cylindrical lens (21).

2. Device for measuring a position of an edge (3) of a web (1) or a sheet, having an optoelectrical measuring apparatus comprising an illuminating apparatus (16), a photoelectric receiver (2) with a large number of photoelements arranged at a short distance one behind another, and an optical system (7) which images the edge (3) of the web (1) sharply in an image plane (11) on the photoelectric receiver (2), in the direction of a transverse axis (12) running at right angles to the edge (3) of the web (1), and scatters the said edge (3) and represents it unsharply in the direction of a longitudinal axis (13) running parallel to the edge (3) of the web (1), the optical system (7) having an imaging lens (33) which, in the immediate region around its optical axis (20), has a uniform value f33 of its focal length and, outside this region, having focal-length values differing from this, an aperture stop (32) with a slit-like aperture (34) with a length 134 and a width b34 being arranged immediately in front of the lens (33) and extending parallel to the edge (3) of the web (1) to be measured, and the following being true of the object distance g37 between the principal plane (37) of the lens and the edge (3) of the web (1), the image distance b37 between the principal plane (37) of the lens and the image plane (11) and the focal length f33: $1/f33 = 1/g37 + 1/b37$.

3. Device according to Claim 2, characterized in that the imaging lens (33) provided is a spherical lens (33).

4. Device according to Claim 2 or 3, characterized in that the width b34 of the aperture (34) is 0.2 mm to 2 mm, and the length 134 of the aperture is greater than 2 mm.

5. Device according to Claim 2, characterized in that the principal plane (30; 38) of the imaging lens (21; 33) is arranged at an image distance (b30; b37), which corresponds to twice the focal length (fq21; f33) of the imaging lens (21; 33), in relation to the photoelectric receiver (2).

6. Device according to Claim 1 or 2, characterized in that a plane-parallel glass plate (17) is arranged as object carrier at an object distance (g30; g37), which corresponds to twice the focal length (fq21; f33) of the imaging lens (21; 33), in relation to the imaging lens (21; 33).

7. Device according to Claim 6, characterized in that an IR filter (18) is arranged between the glass plate (17) and the imaging lens (21; 33).

8. Device according to either of Claims 1 and 2, characterized in that the illuminating apparatus (16) arranged in front of the imaging lens (21; 33) comprises a light source (8) and a condenser (24), the light source (8) being arranged at a distance a23, which corresponds to twice the focal length f24 of the condenser (24), in relation to a principal plane (25) of the condenser (24).

9. Device according to either of Claims 1 and 2, characterized in that the photoelectric receiver (2) provided is a linear CCD sensor.

**Revendications**

1. Dispositif pour la mesure d'une position d'un bord (3) d'une bande (1) ou d'une feuille, avec un dispositif de mesure photoélectrique, constitué d'un dispositif d'éclairement (16), d'un récepteur photoélectrique (2) avec une pluralité de photoéléments disposés les uns derrière les autres à faible distance, et d'un système optique (7) donnant une représentation nette du bord (3) de la bande (1), dans un plan de représentation (11), sur le récepteur photoélectrique (2), dans la direction d'un axe transversal (12) s'étendant transversalement par rapport à l'arête (3) de la bande (1), et donnant une représentation dispersée et non nette dans ladite direction d'un axe longitudinal (13) s'étendant parallèlement au bord (3) de la bande (1), le système optique (7) présentant au moins une lentille de représentation (21), qui présente, par rapport à l'axe transversal (12), une première distance focale fq21 et, par rapport à l'axe longitudinal (13), une deuxième distance focale fl21 qui en est différente, et pour la distance de foyer objet g30, entre le plan principal de lentille (30) et le bord (3) de la bande (1), la distance principale d'image b30, entre le plan principal de lentille (30) et le plan d'illustration (11), et la première distance focale fq21 est donnée la relation : $1/fq21 = 1/g30 + 1/b30$, le plan principal (30 ; 38) de la lentille de représentation (21 ; 33) étant disposé à une distance principale d'image (b30 ; b37) qui correspond au double de la distance focale (fq21 ; f33) de la lentille (21 ; 33) par rapport au récepteur photoélectrique (2), à titre de lentille d'illustration (21) étant prévue une lentille cylindrique (21), dont l'axe longitudinal (31) s'étend parallèlement au bord (3) à mesurer de la bande (1), entre la bande (1) et la lentille d'illustration (21) étant disposé un écran (19) muni d'une ouverture d'écran (27), d'une largeur b27 et d'une longueur 127, tant la largeur b27, qu'également la longueur 127 de l'ouverture d'écran (27) de l'écran (19) étant inférieures à la largeur b21 et à la longueur 121 correspondantes de la lentille cylindrique (21).

2. Dispositif de mesure d'une position d'un bord (3) d'une bande (1) ou d'une feuille avec un dispositif de mesure photoélectrique, constitué d'un dispositif d'éclairement (16), d'un récepteur photoélectrique (2) avec une pluralité de photoéléments disposés les uns derrière les autres à faible distance, et un système optique (7) donnant une illustration nette du bord (3) de la bande (1) dans un plan d'illustration (11), sur le récepteur photoélectrique (2) dans la direction d'un axe transversal (12) s'étendant perpendiculairement au bord (3) de la bande (1), et donnant une illustration dispersée et non nette dans la direction d'un axe longitudinal (13) s'étendant parallèlement au bord (3) de la bande (1), le système optique (7) présentant une lentille d'illustration (33) qui présente, dans la zone immédiate autour de son axe optique (20), une valeur f33 unitaire de sa distance focale, et hors de cette zone, des valeurs de distance focale différentes, directement avant la lentille (3) étant disposé un écran (32) ayant une ouverture d'écran (34) en forme de fente, d'une longueur 134 et d'une largeur b34, s'étendant parallèlement au bord (3) à mesurer de la bande (1), et pour la distance d'objet g37, entre le plan principal de lentille (37) et le bord (3) de la bande (1), la distance principale d'image b37, entre le plan principal de lentille (37) et le plan d'illustration (11), et la distance focale f33 étant donnée la relation : $1/f33 = 1/g37 + 1/b37$.

3. Dispositif selon la revendication 2, caractérisé en ce qu'une lentille sphérique (33) est prévue à titre de lentille d'illustration (33).

4. Dispositif selon la revendication 2 ou 3, caractérisé en ce que la largeur b34 de l'ouverture d'écran (34) est de 0,2 mm à 2 mm et la longueur 134 de l'ouverture d'écran est supérieure à 2 mm.

5. Dispositif selon la revendication 2, caractérisé en ce que le plan principal (30 ; 38) de la lentille d'illustration (21 ; 33) est disposé, par rapport au récepteur photoélectrique (2), à une distance principale d'image (b30 ; b37), qui correspond au double de la distance focale (fq21 ; f33) de la lentille d'illustration (21 ; 33).

6. Dispositif selon la revendication 1 ou 2, caractérisé en ce qu'une plaque en verre (17) plane parallèle est disposée, en tant que support d'objet, à une distance d'objet (g30 ; g37), par rapport à la lentille d'illustration (21 ; 33), qui correspond au double de la distance focale (fq21 ; f33) de la lentille d'illustration (21 ; 33).

7. Dispositif selon la revendication 6, caractérisé en ce qu'un filtre à infrarouges (18) est disposé entre la plaque en verre (17) et la lentille d'illustration (21 ; 33).

8. Dispositif selon l'une des revendications 1 ou 2, caractérisé en ce que le dispositif d'éclairement (16) disposé devant la lentille d'illustration (21 ; 33) est constitué d'une source lumineuse (8) et d'un condensateur (24), la source lumineuse (8) étant disposée à une distance a23 d'un plan principal (25) du condensateur (24), qui correspond au double de la distance focale f24 du condensateur (24).

9. Dispositif selon l'une des revendications 1 ou 2, caractérisé en ce qu'un capteur à lignes CCD est prévu comme récepteur photoélectrique (2).

EP 0 716 287 B1

## FIG.1

## FIG.2

FIG.4

FIG.3

EP 0 716 287 B1

FIG.5

FIG.6